# EUROPÄISCHE PATENTSCHRIFT

(11) **EP 1 310 922 B1**
(45) Veröffentlichungstag und Bekanntmachung des Hinweises auf die Patenterteilung: **03.01.2007**
(21) Anmeldenummer: 02019675.4
(22) Anmeldetag: 04.09.2002
(51) Int. Cl.: G07F 7/08, G07D 11/00

(54) **Sicheres Welchseln von Wertscheinen oder Münzen in elektronische Werteinheiten am Geldeinzahlautomat**
Secure exchange of banknotes or coins into electronic value units at an automatic deposit machine
Conversion sécurisée de billets de banque ou de pièces de monnaie en unités de valeur électroniques à un guichet automatique de dépôt

(30) Priorität: 31.10.2001 DE 10153620
(43) Veröffentlichungstag der Anmeldung: 14.05.2003
(73) Patentinhaber: Wincor Nixdorf International GmbH, 33106 Paderborn (DE)
(72) Erfinder: Nolte, Michael, 33034 Brakel (DE); Weigold, Richard, 33699 Bielefeld (DE)

(56) Entgegenhaltungen:
- EP-A- 0 356 121
- EP-A- 0 458 610
- WO-A-99/16027
- DE-U- 9 412 269
- US-A- 5 440 108
- US-A- 5 952 639

## Beschreibung

Die Erfindung betrifft eine Vorrichtung zum Wechseln von Wertscheinen oder Münzen in elektronische Werteinheiten und Laden derselben in den Speicher einer elektronischen Geldbörse, umfassend eine Annahmestelle zur Entgegennahme der Wertscheine oder Münzen,
einen Tresor, in dem sich
- eine Prüfeinheit zur Echtheitsprüfung der eingegebenen Wertscheine oder Münzen,
- mindestens ein Zwischenspeicher für die geprüften Wertscheine oder Münzen,
- mindestens ein Endspeicher für die Wertscheine oder Münzen und
- eine Wertermittlungseinrichtung zum Ermitteln des Gesamtwertes der während derselben Transaktion eingegebenen Wertscheine oder Münzen befindet,
eine elektronische Steuereinheit,
ein mit der elektronischen Steuereinheit verbundenes Kartenlese-/-schreibegerät, und
ein mit der elektronischen Steuereinheit verbundenes Sicherheitsmodul, das über einen ersten zum Laden der elektronischen Geldbörse benötigten kryptographischen Schlüssel verfügt.

Vorrichtungen zum Einzahlen von Wertscheinen oder Münzen und zur Chipkartenverarbeitung sind aus Kundenterminals bekannt, wie sie Kreditinstitute zur Verfügung stellen. Eine solche Vorrichtung ist beispielsweise in der US 5,952,639 beschrieben. Bei derartigen Kundenterminals befindet sich die elektronische Steuereinrichtung, die die Zusammenarbeit der funktionellen Einheiten des Terminals steuert, in einer sicheren Umgebung, beispielsweise in einem Tresor. Dadurch soll z.B. verhindert werden, daß die Steuerung dahingehend manipuliert wird, daß mehr Werteinheiten in den Speicher der elektronischen Geldbörse geladen werden, als tatsächlich eingezahlt wurden.

Die Unterbringung der Steuerung im Tresor hat für den Betreiber des Terminals jedoch gravierende Nachteile. Ein wesentlicher Nachteil besteht darin, daß zur Installation, Wartung und nachträglichen Modifikation der Steuerungssoftware jedesmal der Tresor geöffnet werden muß, was unter Wahrung der Sicherheit vor Mißbrauch einen erheblichen Aufwand bedeutet. Eine Steuerung, die lediglich durch eine sichere Umgebung geschützt ist, muß dennoch auf Manipulationen prüfbar sein, und deshalb einfach gehalten sein. Eine einfache Steuerung steht jedoch einem vielseitigen und flexiblen Serviceangebot des Betreibers gegenüber dem Kunden im Wege. Insgesamt führt eine Steuerung, die auf das Innere eines Tresors beschränkt ist, zu hohen Wartungskosten und mangelhafter Flexibilität des Systems als ganzem.

Der Erfindung liegt die Aufgabe zugrunde, eine Vorrichtung eingangs genannter Art anzugeben, bei der sich ein Großteil der Steuerung außerhalb der sicheren Umgebung befindet, und gleichzeitig Sicherheit vor Manipulation gewährleistet.

Diese Aufgabe wird bei einer Vorrichtung eingangs genannter Art dadurch gelöst, daß sich im Tresor ferner eine kryptographische Überwachungseinheit befindet, die über einen zweiten kryptographischen Schlüssel verfügt, und die dazu ausgelegt ist, das Überprüfen und die Wertermittlung der eingegebenen Wertscheine oder Münzen zu überwachen und bei positiver Prüfung derselben ein mit dem zweiten Schlüssel gesichertes, den Gesamtwert der eingegebenen Wertscheine oder Münzen repräsentierendes Gesamtwertzertifikat für das Sicherheitsmodul bereitzustellen,
daß das Sicherheitsmodul ebenfalls über den zweiten Schlüssel verfügt und das Laden des Gesamtwertes in elektronischen Werteinheiten in den Speicher der elektronischen Geldbörse durch eine mit dem ersten Schlüssel authentifizierte Nachricht veranlaßt, woraufhin die elektronische Geldbörse dem Sicherheitsmodul dieses Laden mit einer ebenfalls mit dem ersten Schlüssel authentifizierten Nachricht quittiert, und
daß das Sicherheitsmodul daraufhin ein mit dem zweiten Schlüssel verschlüsseltes Quittungszertifikat für die kryptographische Überwachungseinheit erstellt, anhand dessen die kryptographische Überwachungseinheit erkennen kann, ob die elektronischen Werteinheiten korrekt geladen wurden oder nicht und entsprechend den Weitertransport der Wertscheine oder Münzen vom Zwischenspeicher in den Endspeicher bzw. die Wiederausgabe der zwischengespeicherten Wertscheine oder Münzen veranlaßt.

Die Steuerung, die die Zusammenarbeit von kryptographischer Überwachungseinheit, Sicherheitsmodul, Kartenlese-/-schreibegerät und elektronischer Geldbörse steuert, muß also nicht in sicherer Umgebung untergebracht sein. Denn die gegen Manipulation sensiblen Daten, nämlich solche, die den Gesamtwert der eingezahlten Wertscheine oder Münzen betreffen und solche, die den Erhalt der elektronischen Werteinheiten durch die elektronische Geldbörse quittieren, können bei diesem Aufbau verschlüsselt an die Steuerung übergeben werden. Die Steuerung selbst verfügt über keinen der beiden verwendeten Schlüssel, deshalb können die sensiblen Daten über die Steuerung nicht manipuliert werden.

Aus diesem Grund kann die Steuerungseinrichtung mit einem offenen Netzwerk, beispielsweise dem Internet verbunden sein. Dieses ermöglicht eine kostengünstige Installation und Wartung der Steuerungssoftware über das Netzwerk und spart dem Betreiber Kosten. Aufgrund der Unterstützung durch das Netzwerk kann die elektronische Steuerungsvorrichtung einfach und preiswert gehalten werden, z.B. kann gegebenenfalls auf einen eigenen Massenspeicher verzichtet werden.

Durch den beschriebenen Aufbau ist die erfindungsgemäße Vorrichtung in ihrer Verwendung flexibel. Ändern sich beispielsweise gewisse Standards der elektronischen Geldbörse oder sollen weitere Geldbörsensysteme unterstützt werden, muß im wesentlichen nur die Steuerungssoftware verändert werden, was bei der erfindungsgemäßen Vorrichtung aus den genannten Gründen verhältnismäßig leicht möglich ist.

Das Sicherheitsmodul, das über zwei kryptographische Schlüssel verfügt, muß selbstverständlich gegen Zugriff von außen geschützt sein. Dazu kann es beispielsweise im Tresor der Vorrichtung untergebracht sein.

In einer bevorzugten Ausführungsform befindet sich das Sicherheitsmodul jedoch außerhalb des Tresors, und ist auf andere an sich bekannte Weise gegen Zugriff geschützt. Dies bietet den Vorteil, daß die erfindungsgemäße Vorrichtung unterschiedlichen Aufgaben leicht angepaßt werden kann, die Austausch oder Modifikation des Sicherheitsmoduls erfordern. Z.B. kann die Unterstützung unterschiedlicher oder zusätzlicher elektronischer Geldbörsensysteme oder weiterer, an sich bekannter Kundenterminalfunktionen zusätzliche Schlüssel erfordern, die im Sicherheitsmodul gespeichert werden müssen.

Ein außerhalb des Tresors befindliches Sicherheitsmodul kann in einer weiteren bevorzugten Ausführungsform mit einer Eingabevorrichtung, insbesondere einem PIN-Pad ausgestattet sein. Derartige Sicherheitsmodule mit Eingabefeld sind als sogenannte "encryptic PIN-Pads" bekannt. Ihre Verwendung bietet sich an, wenn die erfindungsgemäße Vorrichtung weitere Funktionen beinhaltet, die die Eingabe einer Geheimzahl erforderlich machen.

Der Erfindung liegt ferner die Aufgabe zugrunde, ein Verfahren zur Steuerung einer Vorrichtung zum Wechseln von Wertscheinen oder Münzen in elektronische Werteinheiten und Laden derselben in den Speicher einer elektronischen Geldbörse nach dem Oberbegriff von Anspruch 4 anzugeben. Diese Aufgabe wird durch die Merkmale von Anspruch 4 gelöst.

Weitere Vorteile und Merkmale der erfindungsgemäßen Lösung ergeben sich aus der folgenden Beschreibung, welche in Verbindung mit den beigefügten Zeichnungen die Erfindung anhand eines Ausführungsbeispieles erläutert. Darin zeigt:
- Fig. 1: den schematischen Aufbau einer erfindungsgemäßen Vorrichtung, in dem sich das Sicherheitsmodul in Form eines encryptic PIN-Pads außerhalb des Tresors befindet, und
- Fig. 2: ein Pfeildiagramm, das die Zusammenarbeit von Steuereinheit, kryptographischer Überwachungseinheit, Sicherheitsmodul, Kartenlese-/-schreibegerät und elektronischer Geldbörse darstellt.

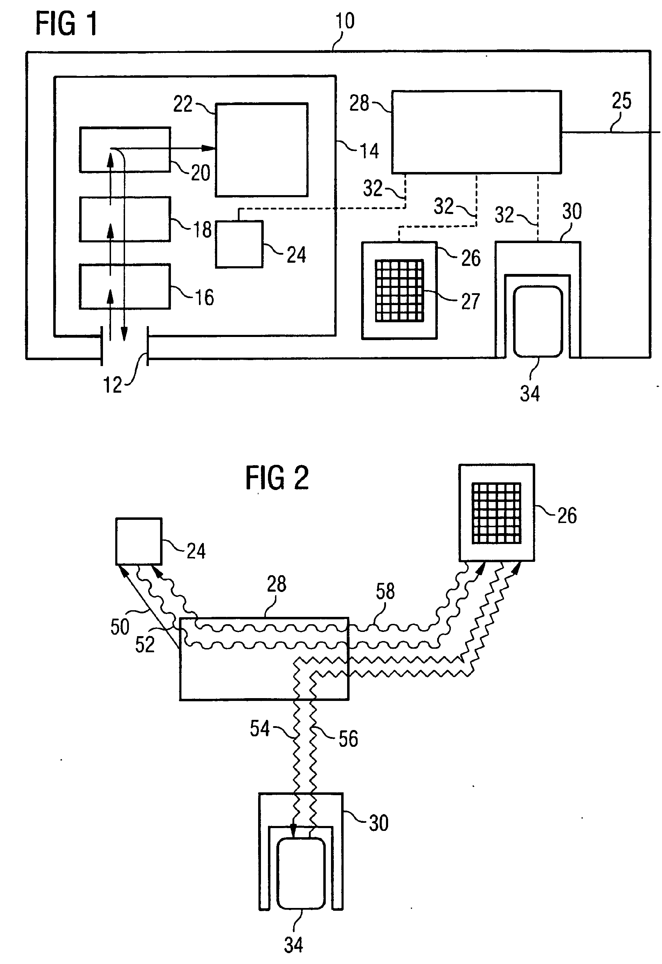

Fig. 1 zeigt eine erfindungsgemäße Vorrichtung 10. Sie hat eine Annahmestelle 12, in der Banknoten entgegengenommen werden. Von dort gelangen die Banknoten - den Pfeilen in Fig.1 folgend - in einen Tresor 14, in dem sie von einer Prüfeinheit 16 auf Echtheit geprüft werden, der Gesamtwert aller bei einer Transaktion eingegebenen Wertscheine von einer Wertermittlungseinrichtung 18 ermittelt wird und die Banknoten in einem Zwischenspeicher 20 abgelegt werden. Ferner im Tresor enthalten sind ein Endspeicher 22 zur Ablage der eingegebenen Banknoten nach erfolgreichem Laden der elektronischen Werteinheiten auf die elektronische Geldbörse und eine kryptographische Überwachungseinheit 24 zur Überwachung der Echtheitsprüfung und Gesamtwertermittlung. Ebenfalls zur erfindungsgemäßen Vorrichtung gehören ein Sicherheitsmodul 26, eine elektronische Steuerungseinheit 28 und ein Kartenlese-/-schreibegerät 30, die sich außerhalb des Tresors befinden. Die elektronische Steuereinheit 28 steuert die Zusammenarbeit von kryptographischer Überwachungseinheit 24, Sicherheitsmodul 26 und Kartenlese-/-schreibegerät 30 und ist dazu mit diesen über Datenleitungen 32 verbunden.

In das Kartenlese-/-schreibegerät 30 kann eine elektronische Geldbörse 34 eingeführt werden. Die elektronische Geldbörse 34 ist eine Chipkarte, die über einen Speicher verfügt, in den elektronische Werteinheiten gespeichert werden können, und sie verfügt ferner über einen ersten kryptographischen Schlüssel, mit Hilfe dessen die Karte sicherstellen kann, daß sie von einem "echten", d.h. dazu autorisierten Terminal geladen wird.

Das Sicherheitsmodul 26 verfügt ebenfalls über den ersten kryptographischen Schlüssel. Somit können sich das Sicherheitsmodul 26 und die Chipkarte 34 gegenseitig ausweisen, und die elektronischen Werteinheiten können durch Vermittlung des Sicherheitsmodules 26 auf die Chipkarte 34 geladen werden. Der Datentransfer zwischen Sicherheitsmodul 26 und Chipkarte 34 wird von der elektronischen Steuereinheit 28 gesteuert. Die Steuereinheit 28 ist hierbei ein PC, der über eine Leitung 25 mit dem Internet verbunden ist. Durch die Verbindung zum Internet und die Komplexität eines PC kann dieser nicht hundertprozentig gegen Manipulation beispielsweise durch aufgespielte Viren oder trojanische Pferde geschützt werden. Durch das erste Schlüsselpaar kann jedoch die Chipkarte sicherstellen, daß sie vom echten Sicherheitsmodul den tatsächlich eingezahlten Gesamtwert mitgeteilt bekommt. Der sichere Datenaustausch zwischen Sicherheitsmodul und Chipkarte ist an sich aus dem Stand der Technik bekannt.

Der Vorteil der erfindungsgemäßen Vorrichtung liegt darin, daß sie veränderten oder erweiterten Ansprüchen flexibel anpaßbar ist. Sollen beispielsweise mehrere oder zusätzliche Kartensysteme unterstützt werden, kann die dazu benötigte Steuerungssoftware über die Internetverbindung 25 einfach in die Steuerungseinheit 28 gebracht werden.

Außerdem kann die erfindungsgemäße Vorrichtung unterschiedlichen Anforderungen leicht angepaßt werden. Soll die Vorrichtung beispielsweise in einem Terminal mit weiteren Funktionen kombiniert werden, kann der Vorrichtung ein diesen Funktionen entsprechendes Sicherheitsmodul zugeordnet werden, ohne daß sich der wesentliche Aufbau ändert. Benötigt diese Funktion beispielsweise die Eingabe einer Geheimzahl (PIN), kann das Sicherheitsmodul 26 wie in Fig.1 gezeigt auf an sich bekannte Weise mit einem PIN-Pad kombiniert werden.

Eventuell benötigte zusätzliche Schlüssel können verhältnismäßig leicht und auch nachträglich in das Sicherheitsmodul eingefügt werden, weil es sich außerhalb des Tresors befindet. Innerhalb des Tresors befinden sich lediglich Funktionseinheiten, die die Grundfunktion verrichten, an denen sich im allgemeinen nichts ändert, nämlich Prüfen, Zählen und Verwahren der Banknoten.

Bei der erfindungsgemäßen Vorrichtung muß dem Sicherheitsmodul der Gesamtwert der eingegebenen Banknoten auf gegen Manipulation sichere Weise mitgeteilt werden, damit dieses das Laden der entsprechenden Summe in elektronischen Werteinheiten auf die Chipkarte veranlassen kann. Der Datenaustausch im einzelnen ist in Fig. 2 dargestellt. Nachdem die Wertscheine eingegeben worden sind, fragt die Steuereinheit 28 die kryptographische Überwachungseinheit 24 nach dem Gesamtwert der eingezahlten Banknoten. Die Überwachungseinheit 24 erstellt ein mit dem zweiten Schlüssel gesichertes Gesamtwertzertifikat 52, das dem Sicherheitsmodul 26 überbracht wird. Die Verschlüsselung ist hierbei wichtig, weil der Datentransfer an sich nicht gegen Manipulation geschützt ist. Es bestünde somit die Gefahr, daß die übertragenen Daten dahingehend manipuliert werden, daß sie einen höheren als den tatsächlich eingezahlten Wert repräsentieren.

In der sicheren Umgebung des Sicherheitsmoduls 26 wird das Gesamtwertzertifikat 52 entschlüsselt und das Sicherheitsmodul 26, das nun in Kenntnis des Gesamtwertes ist, sendet über Steuerungseinrichtung 28 und Kartenlese-/-schreibegerät 30 einen Auftrag 54 an die elektronische Geldbörse, den Gesamtwert in elektronischen Werteinheiten zu laden. Dieser Auftrag 54 ist mit dem ersten Schlüssel gesichert, einerseits dazu, daß der im Auftrag enthaltene Gesamtwert nicht verändert werden kann, andererseits dafür, daß die elektronische Geldbörse sicherstellen kann, daß der Auftrag von einem "echten" Terminal kommt.

Die Werteinheiten werden in den Speicher der elektronischen Geldbörse 34 geladen. Danach sendet die elektronische Geldbörse über Kartenlese-/-schreibegerät 30 und PC 28 ein mit dem ersten Schlüssel verschlüsseltes Quittungssignal 56 über die erhaltenen elektronischen Werteinheiten an das Sicherheitsmodul 26. Dieses Quittungssignal 56 wird im Sicherheitsmodul 26 in ein mit dem zweiten Schlüssel gesichertes Quittungszertifikat 58 umgeschlüsselt und der kryptographischen Überwachungseinheit überbracht. Zeigt das Quittungszertifikat 58 an, daß das Laden der korrekten Wertsumme auf die elektronische Geldbörse gelungen ist, werden die eingegebenen Banknoten aus dem Zwischenspeicher 20 in den Endspeicher 22 weiterbefördert. Andernfalls werden die zwischengespeicherten Banknoten wieder ausgegeben.

Es ist wichtig, daß das Quittungssignal 56 und das Quittungszertifikat 58 verschlüsselt sind, weil der kryptographischen Überwachungseinheit beispielsweise durch geeignete Manipulation eines positiven Quittungszertifikates signalisiert werden könnte, der Ladevorgang sei gescheitert, woraufhin die im Zwischenspeicher befindlichen Banknoten trotz bereits gutgeschriebener elektronischer Werteinheiten wieder ausgegeben würden.

### Bezugszeichenliste

- 10: erfindungsgemäße Vorrichtung
- 12: Annahmestelle
- 14: Tresor
- 16: Prüfeinheit
- 18: Wertermittlungseinrichtung
- 20: Zwischenspeicher
- 22: Endspeicher
- 24: kryptographische Überwachungseinheit
- 25: Netzwerkanschluß
- 26: Sicherheitsmodul
- 28: elektronische Steuereinheit
- 30: Kartenlese-/-schreibegerät
- 32: Datenleitungen
- 34: elektronische Geldbörse
- 50: Anfrage nach Gesamtwert eingezahlter Werteinheiten
- 52: Gesamtwertzertifikat
- 54: Nachricht zum Laden der elektronischen Werteinheiten in den Speicher der elektronischen Geldbörse
- 56: Quittungssignal
- 58: Quittungszertifikat

## Patentansprüche

1. Vorrichtung (10) zum Wechseln von Wertscheinen oder Münzen in elektronische Werteinheiten und Laden derselben in den Speicher einer elektronischen Geldbörse (34), umfassend
eine Annahmestelle (12) zur Entgegennahme der Wertscheine oder Münzen,
einen Tresor (14), in dem sich
- eine Prüfeinheit (16) zur Echtheitsprüfung der eingegebenen Wertscheine oder Münzen,
- mindestens ein Zwischenspeicher (20) für die geprüften Wertscheine oder Münzen,
- mindestens ein Endspeicher (22) für die Wertscheine oder Münzen und
- eine Wertermittlungseinrichtung (18) zum Ermitteln des Gesamtwertes der während derselben Transaktion eingegebenen Wertscheine oder Münzen
befinden,
eine elektronische Steuereinheit (28),
ein mit der elektronischen Steuereinheit verbundenes Kartenlese-/-schreibegerät (30)
und ein mit der elektronischen Steuereinheit (28) verbundenes Sicherheitsmodul (26), das über einen ersten zum Laden der elektronischen Geldbörse (34) benötigten kryptographischen Schlüssel verfügt, **dadurch gekennzeichnet,**
**daß** sich im Tresor (14) ferner eine kryptographische Überwachungseinheit (24) befindet, die über einen zweiten kryptographischen Schlüssel verfügt, und die dazu ausgelegt ist, das Überprüfen und die Wertermittlung der eingegebenen Wertscheine oder Münzen zu überwachen und bei positiver Prüfung derselben ein mit dem zweiten Schlüssel gesichertes, den Gesamtwert der eingegebenen Wertscheine oder Münzen repräsentierendes Gesamtwertzertifikat (52) für das Sicherheitsmodul (26) bereitzustellen,
**daß** das Sicherheitsmodul (26) ebenfalls über den zweiten Schlüssel verfügt und das Laden des Gesamtwertes in elektronischen Werteinheiten in den Speicher der elektronischen Geldbörse (34) durch eine mit dem ersten Schlüssel authentifizierte Nachricht (54) veranlaßt, woraufhin die elektronische Geldbörse (34) dem Sicherheitsmodul dieses Laden mit einer ebenfalls mit dem ersten Schlüssel authentifizierten Nachricht (56) quittiert, und
**daß** das Sicherheitsmodul (26) daraufhin ein mit dem zweiten Schlüssel verschlüsseltes Quittungszertifikat (58) für die kryptographische Überwachungseinheit (24) erstellt, anhand dessen die kryptographische Überwachungseinheit (24) erkennen kann, ob die elektronischen Werteinheiten korrekt geladen wurden oder nicht und entsprechend den Weitertransport der Wertscheine oder Münzen vom Zwischenspeicher (20) in den Endspeicher (22) bzw. die Wiederausgabe der zwischengespeicherten Wertscheine oder Münzen veranlaßt.

2. Vorrichtung nach Anspruch 1, **dadurch gekennzeichnet, daß** sich das Sicherheitsmodul (26) außerhalb des Tresors (14) befindet.

3. Vorrichtung nach Anspruch 2, **dadurch gekennzeichnet, daß** das Sicherheitsmodul (26) mit einer Eingabevorrichtung (27), insbesondere mit einem PIN-Pad ausgestattet ist.

4. Verfahren zur Steuerung einer Vorrichtung (10) zum Wechseln von Wertscheinen oder Münzen in elektronische Werteinheiten und Laden derselben in den Speicher einer über einen in einem Sicherheitsmodul (26) abgelegten ersten kryptographischen Schlüssel verfügenden elektronischen Geldbörse (34), bei dem die eingegebenen Wertscheine oder Münzen von einer Annahmestelle (12) der Vorrichtung (10) entgegengenommen werden und in der sicheren Umgebung eines zur Vorrichtung gehörigen Tresors (14) von einer Prüfeinheit (16) auf Echtheit geprüft werden, ihr Gesamtwert ermittelt wird und die Wertscheine oder Münzen in einem Zwischenspeicher (20) abgelegt werden, **dadurch gekennzeichnet, daß** eine ebenfalls im Tresor (14) befindliche kryptographische Überwachungseinheit (24) das Prüfen und die Wertermittlung der eingegebenen Wertscheine oder Münzen überwacht und ein mit einem zweiten kryptographischen Schlüssel verschlüsseltes, den Gesamtwert der eingegebenen Wertscheine oder Münzen repräsentierendes Gesamtwertzertifikat (52) für das Sicherheitsmodul (26) erstellt,
daß das über den ersten und zweiten Schlüssel verfügende Sicherheitsmodul das Laden des Gesamtwertes in elektronischen Werteinheiten in den Speicher der elektronischen Geldbörse (34) durch eine mit dem ersten Schlüssel authentifizierte Nachricht (54) veranlaßt,
daß die elektronische Geldbörse (34) dem Sicherheitsmodul dieses Laden mit einer ebenfalls mit dem ersten Schlüssel authentifizierten Nachricht (56) quittiert, und
daß das Sicherheitsmodul (26) daraufhin ein mit dem zweiten Schlüssel verschlüsseltes Quittungszertifikat (58) für die kryptographische Überwachungseinheit (24) erstellt, anhand dessen die kryptographische Überwachungseinheit (24) erkennen kann, ob die elektronischen Werteinheiten korrekt geladen wurden oder nicht und entsprechend den Weitertransport der Wertscheine oder Münzen vom Zwischenspeicher (20) in den Endspeicher (22) bzw. die Wiederausgabe der zwischengespeicherten Wertscheine oder Münzen veranlaßt.

## Claims

1. Apparatus (10) for changing banknotes or coins into electronic denominations and loading them into the memory of an electronic purse (34), comprising
a collection point (12) for receiving the banknotes or coins,
a safe (14) containing
- a checking unit (16) for checking the authenticity of the banknotes or coins which have been input,
- at least one buffer store (20) for the checked banknotes or coins,
- at least one final store (22) for the banknotes or coins, and
- a value ascertainment device (18) for ascertaining the total value of the banknotes or coins which have been input during the same transaction,
an electronic control unit (28),
a card reader/writer (30) connected to the electronic control unit,
and a security module (26) which is connected to the electronic control unit (28) and which has a first cryptographic key required for loading the electronic purse (34), **characterized**
**in that** the safe (14) also contains a cryptographic monitoring unit (24) which has a second cryptographic key and which is designed to monitor the checking and value ascertainment for the banknotes or coins which have been input and, in the event of a positive check thereon, to provide a total value certificate (52) for the security module (26), said certificate representing the total value of the banknotes or coins which have been input and being protected by means of the second key,
**in that** the security module (26) likewise has the second key and prompts loading of the total value in electronic denominations into the memory of the electronic purse (34) using a message (54) authenticated with the first key, whereupon the electronic purse (34) acknowledges this loading to the security module using a message (56) which is likewise authenticated with the first key, and
**in that** the security module (26) then creates an acknowledgement certificate (58), encrypted with the second key, for the cryptographic monitoring unit (24), and the cryptographic monitoring unit (24) can use this acknowledgement certificate to identify whether or not the electronic denominations have been loaded correctly and accordingly prompts the banknotes or coins to be transported further from the buffer store (20) to the final store (22) or prompts the buffer-stored banknotes or coins to be output again.

2. Apparatus according to Claim 1, **characterized in that** the security module (26) is located outside the safe (14).

3. Apparatus according to Claim 2, **characterized in that** the security module (26) is equipped with an input apparatus (27), particularly with a PIN pad.

4. Method for controlling an apparatus (10) for changing banknotes or coins into electronic denominations and loading them into the memory of an electronic purse (34) which has a first cryptographic key stored in a security module (26), in which the banknotes or coins which have been input are received by a collection point (12) on the apparatus (10) and are checked for authenticity by a checking unit (16) in the secure environment of a safe (14) belonging to the apparatus, their total value is ascertained and the banknotes or coins are stored in a buffer store (20), **characterized in that** a cryptographic monitoring unit (24) which is likewise located in the safe (14) monitors the checking and value ascertainment for the banknotes or coins which have been input and creates a total value certificate (52) for the security module (26), said certificate representing the total value of the banknotes or coins which have been input and being encrypted with a second cryptographic key,
**in that** the security module having the first and second keys prompts loading of the total value in electronic denominations into the memory of the electronic purse (34) using a message (54) authenticated with the first key,
**in that** the electronic purse (34) acknowledges this loading to the security module using a message (56) which is likewise authenticated with the first key, and
**in that** the security module (26) then creates an acknowledgement certificate (58), encrypted with the second key, for the cryptographic monitoring unit (24), and the cryptographic monitoring unit (24) can use this acknowledgement certificate to identify whether or not the electronic denominations have been loaded correctly and accordingly prompts the banknotes or coins to be transported further from the buffer store (20) to the final store (22) or prompts the buffer-stored banknotes or coins to be output again.

## Revendications

1. Dispositif (10) de conversion de billets de banque ou de pièces de monnaie en unités de valeur électroniques et de chargement de ces unités dans la mémoire d'un porte-monnaie électronique (34), ledit dispositif comportant
un guichet (12) de réception des billets de banque ou des pièces de monnaie,
un coffre-fort (14) dans lequel se trouve
- une unité de vérification (16) destinée à vérifier l'authenticité des billets de banque ou des pièces de monnaie introduite,
- au moins un réservoir intermédiaire (20) destiné aux billets de banque ou aux pièces de monnaie vérifiés,
- au moins un réservoir final (22) destiné aux billets de banque ou aux pièces de monnaie et
- un dispositif de détermination de valeur (18) destiné à déterminer la valeur totale des billets de banque ou des pièces de monnaie introduits lors de la même transaction,
une unité de commande électronique (28),
un appareil de lecture/écriture de cartes (30) relié à l'unité de commande électronique, et
un module de sécurité (26) qui est relié à l'unité de commande électronique (28) et qui dispose d'une première clé cryptographique nécessaire au chargement du porte-monnaie électronique (34),
**caractérisé en ce que**
le coffre-fort (14) contient en outre une unité de surveillance cryptographique (24) qui dispose d'une deuxième clé cryptographique, et qui est conçue pour surveiller la vérification et la détermination de la valeur des billets de banque ou des pièces de monnaie déposés et, en cas de vérification positive, pour délivrer un certificat de valeur totale (52) qui est destiné au module de sécurité (26) et qui représente la valeur totale des billets de banque ou des pièces de monnaie déposés,
**en ce que** le module de sécurité (26) dispose également de la deuxième clé et ordonne le chargement de la valeur totale en unités de valeur électroniques dans la mémoire du porte-monnaie électronique (34) par un message (54) authentifié avec la première clé, puis le porte-monnaie électronique (34) renvoie au module de sécurité une confirmation de ce chargement par un message (56) authentifié également avec la première clé, et
**en ce que** le module de sécurité (26) établit ensuite, à destination de l'unité de surveillance cryptographique (24), un certificat de confirmation (58) qui est codé avec la deuxième clé et qui permet à l'unité de surveillance cryptographique (24) de savoir si les unités de valeur électroniques ont été chargées correctement ou non et d'ordonner de façon correspondante le passage des billets de banque ou des pièces de monnaie du réservoir intermédiaire (20) dans le réservoir final (22) ou la rétrocession des billets de banque ou des pièces de monnaie se trouvant dans le réservoir intermédiaire.

2. Dispositif selon la revendication 1, **caractérisé en ce que** le module de sécurité (26) se trouve à l'extérieur du coffre-fort (14).

3. Dispositif selon la revendication 2, **caractérisé en ce que** le module de sécurité (26) est muni d'un dispositif d'entrée (27), notamment un PIN-Pad.

4. Procédé de commande d'un dispositif (10) de conversion de billets de banque ou de pièces de monnaie en unités de valeur électroniques et de chargement de ces unités dans la mémoire d'un porte-monnaie électronique (34) qui dispose d'une première clé cryptographique stockée dans un module de sécurité (26), les billets de banque ou pièces de monnaie introduits étant reçus par un guichet (12) du dispositif (10), leur authenticité étant vérifiée par une unité de vérification (16) dans l'environnement sécurisé d'un coffre-fort (14) appartenant au dispositif, leur valeur totale étant déterminée et les billets de banque ou pièce de monnaie étant déposés dans un réservoir intermédiaire (20),
**caractérisé en ce que**
le coffre-fort (14) contient en outre une unité de surveillance cryptographique (24) qui surveille la vérification et la détermination de la valeur des billets de banque ou des pièces de monnaie déposés et délivre un certificat de valeur totale (52) qui est destiné au module de sécurité (26), qui est chiffré avec une deuxième clé cryptographique et qui représente la valeur totale des billets de banque ou des pièces de monnaie déposés,
**en ce que** le module de sécurité, qui dispose des première et deuxième clés, ordonne le chargement de la valeur totale en unités de valeur électroniques dans la mémoire du porte-monnaie électronique (34) par un message (54) authentifié avec la première clé,
**en ce que** le porte-monnaie électronique (34) renvoie au module de sécurité une confirmation de ce chargement par un message (56) authentifié également avec la première clé, et
**en ce que** le module de sécurité (26) établit ensuite, à destination de l'unité de surveillance cryptographique (24), un certificat de confirmation (58) qui est codé avec la deuxième clé et qui permet à l'unité de surveillance cryptographique (24) de savoir si les unités de valeur électroniques ont été chargées correctement ou non et d'ordonner de façon correspondante le passage des billets de banque ou des pièces de monnaie du réservoir intermédiaire (20) dans le réservoir final (22) ou la rétrocession des billets de banque ou des pièces de monnaie se trouvant dans le réservoir intermédiaire.
